# EUROPÄISCHE PATENTSCHRIFT

(11) **EP 1 288 590 B1**
(45) Veröffentlichungstag und Bekanntmachung des Hinweises auf die Patenterteilung: **02.05.2007**
(21) Anmeldenummer: 01810850.6
(22) Anmeldetag: 03.09.2001
(51) Int. Cl.: F24J 2/00, F24J 2/50, E04F 13/08, B29D 24/00

(54) **Vorrichtung zum Herstellen von wabenförmigen wärmedämmenden, lichtdurchlässigen Platten und Verfahren zur Herstellung dieser Platte**
Apparatus for manufacturing honeycomb transparent insulating panels and method for manufacturing these panels
Appareil de fabrication de panneaux d'isolation transparents et méthode de fabrication desdits panneaux

(43) Veröffentlichungstag der Anmeldung: 05.03.2003
(73) Patentinhaber: Oesch, Peter, 3042 Ortschwaben (CH)
(72) Erfinder: Oesch, Peter, 3042 Ortschwaben (CH)
(74) Vertreter: BOVARD AG

(56) Entgegenhaltungen:
- EP-A- 0 153 681
- WO-A-01/21906
- DE-A- 3 318 937
- DE-A- 3 622 163
- DE-A- 19 703 961
- DE-A- 19 815 969
- DE-A- 19 936 629
- US-A- 5 390 468
- US-A- 5 931 157

## Beschreibung

Die vorliegende Erfindung bezieht sich auf eine Vorrichtung zum Herstellen von wabenförmigen wärmedämmenden, lichtdurchlässigen Platten gemäss dem Oberbegriff des Patentanspruchs 1. Ferner bezieht sich die Erfindung auf ein Verfahren zur Herstellung dieser Platte.

Insbesondere in Fassadenverkleidungen werden derartige Platten verwendet, um durch das einstrahlende Sonnenlicht Gebäudewände erwärmen zu können, wobei die Fassadenverkleidung gleichzeitig als Isolation gegen die Kälte und gegen die Abstrahlung von Wärme wirksam ist. Zur Verbesserung der Erwärmung der Gebäudewände können diese mit einer Absorptionsschicht versehen werden, es ist auch denkbar, auf den Gebäudewänden beispielsweise Sonnenkollektoren anzubringen.

Bei hochstehender Sonne in warmen Jahreszeiten wird ein grosser Teil des Sonnenlichts durch die transparente Abdeckplatte reflektiert, so dass die Gebäudewand nicht oder nur wenig erwärmt wird, des weiteren können auch Sonnenschutzblenden vorgesehen werden, um den Sonnenlichteinfall zu verringern.

Aus der EP-A-0 153 681 ist ein Verfahren bekannt, mit welchem derartige lichdurchlässige Wabenstrukturen hergestellt werden. Hierbei werden die mit rippenförmigen Strukturen versehenen Elemente in einem äusseren Rahmen aufeinander gestapelt oder als Endlosband aufgerollt. Dies hat den Nachteil, dass das Herstellen von einzelnen Platten aufwändig ist.

Eine Aufgabe der Erfindung besteht darin, eine Vorrichtung zu schaffen, mit welcher wabenförmige Platten in einfacher Weise hergestellt werden können.

Erfindungsgemäss erfolgt die Lösung dieser Aufgabe durch die im Anspruch 1 aufgeführten Merkmale, wobei vorteilhafte Ausgestaltungen in den abhängigen Ansprüchen 2 bis 5 aufgeführt sind.

Eine weitere Aufgabe der Erfindung besteht darin, ein Verfahren zum Herstellen dieser Platten mittels der Vorrichtung zu schaffen.

Erfindungsgemäss erfolgt die Lösung dieser Aufgabe durch die im Anspruch 6 aufgeführten Merkmale.

Mit dem hier dargestellten Verfahren und den vorteilhaften Ausgestaltungen, wie sie in den abhängigen Ansprüchen 7 bis 9 enthalten sind, kann in einfacher Weise diese wabenförmige Platte hergestellt werden, die auch ein geringes Gewicht aufweist.

Eine Ausführungsform der erfindungsgemässen Vorrichtung zur Herstellung einer wabenförmigen Platte und ein Verfahren zur Herstellung der Platten mittels der erfindungsgemässen Vorrichtung werden nachfolgend anhand der beiliegenden Zeichnung beispielhaft näher erläutert.

Es zeigt
Fig. 1 eine räumliche Explosionsdarstellung eines Ausschnitts einer Fassadenverkleidung mit einer erfindungsgemäss hergestellten Platte;
Fig. 2 eine Ansicht auf die Fassadenverkleidung im montierten Zustand;
Fig. 3 eine Darstellung im Schnitt der Fassadenverkleidung mit erfindungsgemäss hergestellter Platte;
Fig. 4 in schematischer Darstellung eine Vorrichtung zum Herstellen von wabenförmigen Platten;
Fig. 5 in räumlicher Darstellung die Anordnung zum Verformen der Streifen;
Fig. 6 eine Seitenansicht der mit Zähnen versehenen Rädern zum Verformen der Streifen;
Fig. 7 in räumlicher Darstellung ein Teil der Walze zum Ausrichten und Aneinanderfügen der verformten Streifen; und
Fig. 8 eine Ansicht auf die Walze mit den eingelegten verformten Streifen.

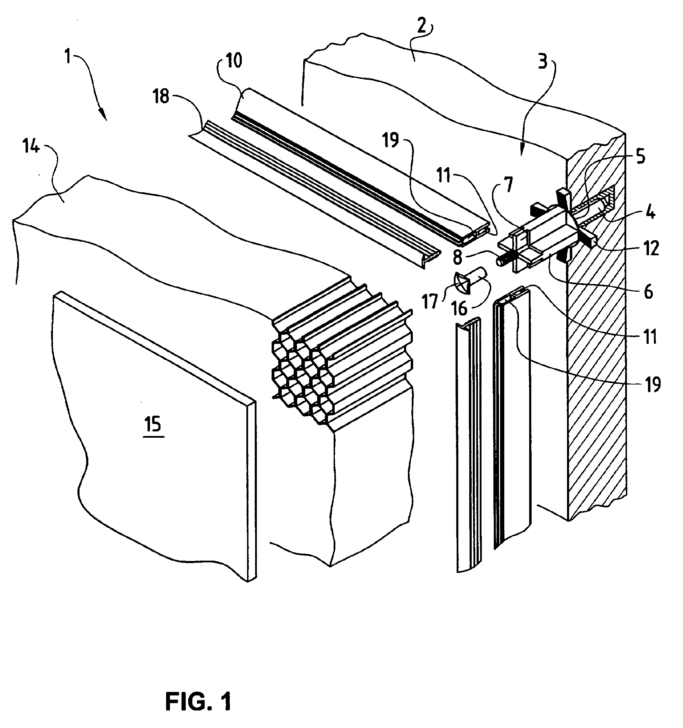

Wie aus Fig. 1 ersichtlich ist, werden zur Befestigung einer Fassadenverkleidung 1 mit einer darin eingesetzten, erfindungsgemäss hergestellten Platte 14, wie später noch beschrieben wird, an einer Gebäudewand 2 in dieser Elemente 3 verankert. Zu diesem Zweck weist das Element 3 einen zapfenförmigen Vorsprung 4 auf, der beispielsweise mit einem Gewinde versehen sein kann und in bekannter Weise in einen in die Gebäudewand 2 eingesetzten Dübel einschraubbar ist. An den zapfenförmigen Vorsprung ist ein Flansch 5 angrenzend, an den sich Längsstege 6 anschliessen, die zueinander winklig angeordnet sind.

An den der Gebäudewand 2 abgewandten Endbereichen der Längsstege 6 weisen diese eine Abstufung 7 auf, die eine geringere Stegdicke haben. An diese Abstufung 7 ist ein Zapfen 8 angebracht.

Auf die Abstufungen 7 der Elemente 3 sind Längsprofile 9 und Querprofile 10 aufsteckbar. Diese Längs- und Querprofile 9 und 10 weisen hierzu eine in Längsrichtung verlaufende schlitzförmige Ausnehmung 11 auf. Diese schlitzförmige Ausnehmung 11 hat eine Tiefe, die der Höhe der Abstufung 7 der Längsstege 6 entspricht. Die Längs- und Querprofile 9, 10 überdecken somit die Abstufungen 7 der Längsstege 6, und da diese die gleiche Breite aufweisen wie die Längsstege 6, ergibt sich jeweils eine durchgehende ebene Fläche. Ferner sind die Längs- und Querprofile 9 und 10 jeweils von der Gebäudewand 2 beabstandet.

Die in der Gebäudewand 2 verankerten Elemente 3 können, da deren Oberfläche nicht immer genau eben ist, durch zwischen die Gebäudewand 2 und den Flansch 5 eingefügte Keile 12 ausgerichtet werden.

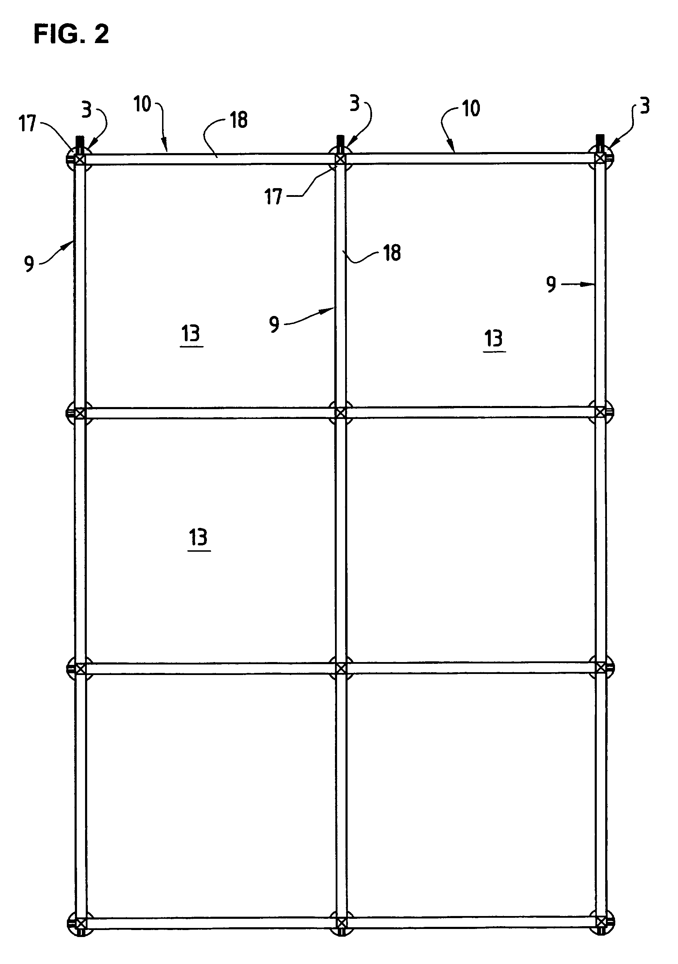

Durch an der Gebäudewand 2 angebrachte Elemente 3 und die darauf aufgesteckten Längs- und Querprofile 9 und 10 wird ein Raster gebildet, wie er aus Fig. 2 ersichtlich ist. Dadurch werden Abschnitte 13 gebildet, in welche die wärmedämmenden, lichtdurchlässigen Platten 14 eingelegt werden. Diese Platten weisen die Form einer Wabe auf. Danach wird eine transparente Abdeckplatte 15 auf die durch die Längs- und Querprofile 9 und 10 gebildeten Abschnitte 13 aufgelegt. Diese transparenten Abdeckplatten werden einerseits durch Hohlbolzen 16 mit Kopf 17 gehalten, die jeweils auf den Zapfen 8 der Elemente 3 aufsetzbar sind, andererseits werden diese durch ein Profil 18 gehalten, welche in einen Längsschlitz 19 einsetzbar ist, welche in den Längs- und Querprofilen 9 und 10 angebracht sind, wobei dieses Profil 18 zusätzlich zur Haltefunktion auch für die Abdichtung besorgt ist.

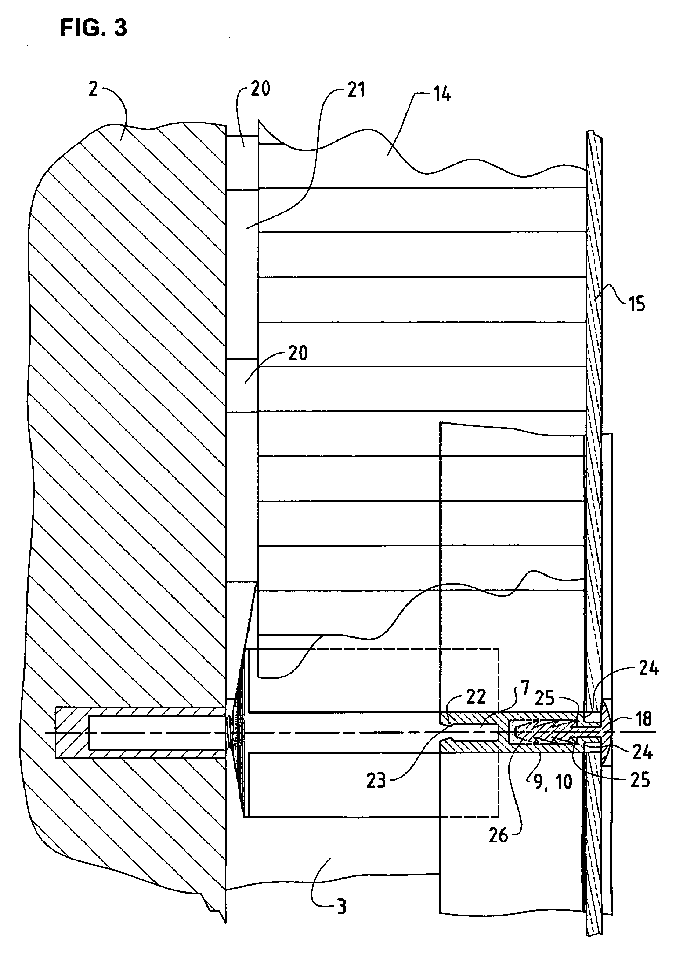

Wie aus Fig. 3 ersichtlich ist, sind zwischen die Oberfläche der Gebäudewand 2 und der wabenförmigen Platte 14 elastische Abstandhalter 20, die beispielsweise aus einem Schaumstoffkörper bestehen können, eingesetzt, welche einerseits dafür besorgt sind, dass zwischen der Oberfläche der Gebäudewand 2 und der wabenförmigen Platte 14 ein Lüftungsspalt 21 gebildet wird, und dass andererseits die wabenförmige Platte 14 gegen die transparente Abdeckplatte 15 gepresst wird. Dadurch wird eine Zirkulation der Luft zwischen wabenförmiger Platte 14 und transparenter Abdeckplatte 15 verhindert.

Die schlitzförmige Ausnehmung 11 der Längs- und Querprofile 9 und 10 kann, wie hier dargestellt ist, im Endbereich mit einer Verdickung 22 versehen sein, welche im auf die Elemente 3 aufgesteckten Zustand in an der Abstufung 7 angebrachten Einbuchtungen 23 einschnappen können, wodurch eine optimale Halterung erreicht wird.

In vorteilhafter Weise sind die Längs- und Querprofile 9 und 10 im der Gebäudewand abgewandten Bereich ebenfalls mit einer längs verlaufenden Abstufung 24 versehen, in welche die Abdeckplatten 15 einlegbar und entsprechend positioniert sind. Durch diese Abstufung 24 entsteht im Längsschlitz 19 der Längs- und Querprofile 9 und 10 ein Vorsprung 25, der als Verankerung für das Profil 18 dient, welches demzufolge mit Schnappvorsprüngen 26 ausgestattet ist.

Die Abdeckplatten 15 können aus Glas oder einem witterungsbeständigen transparenten Kunststoff gebildet sein, die Längs- und Querprofile 9 und 10 bestehen vorteilhafterweise aus einer Aluminiumlegierung, die wabenförmige Platte kann aus PET oder einem ähnlichen geeigneten Material bestehen. Die Wandung der die Waben bildenden Kammern weist eine Dicke von etwa 0,2 mm auf. Die Dicke der wabenförmigen Platte bewegt sich im Bereich von 6 bis 14 cm. Der Lüftungsspalt 21 beträgt etwa 5 mm.

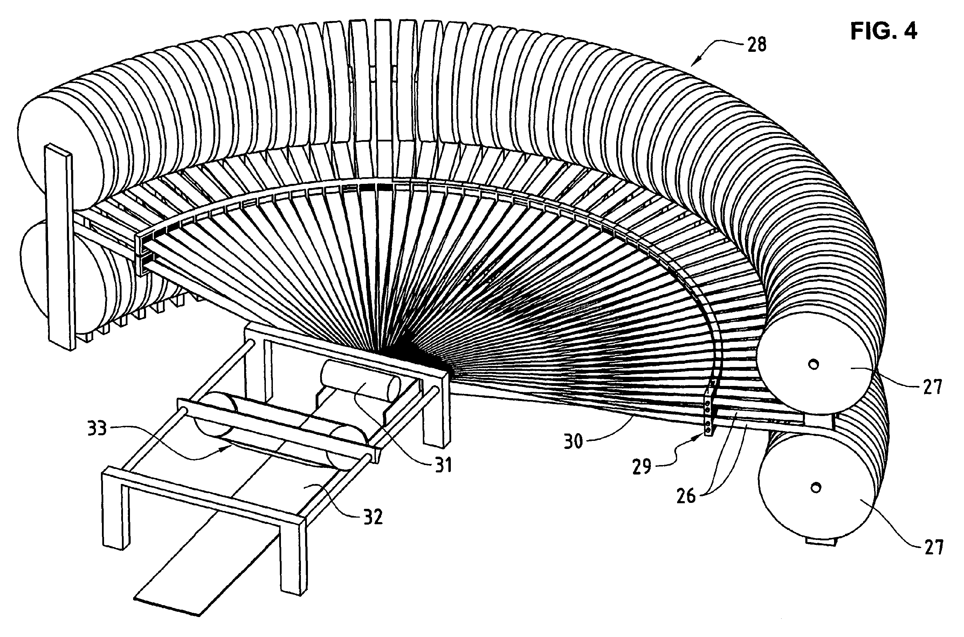

In Fig. 4 ist in schematischer Weise eine Vorrichtung dargestellt, mit welcher wabenförmige Platten hergestellt werden können, wie sie bei der vorgängig beschriebenen Fassadenverkleidung angewandt werden können. Selbstverständlich ist die Verwendung derartiger wabenförmiger Platten aber nicht nur auf den Einsatz in Fassadenverkleidungen beschränkt. Es sind auch viele andere Verwendungsarten denkbar.

Das streifenförmige Material 26, das das Ausgangsmaterial bildet, ist auf Spulen 27 aufgewickelt, welche in einem Magazin 28 angeordnet sind. Diese Streifen 26 werden kontinuierlich von den Spulen 27 abgezogen und jeweils durch eine Verformungseinrichtung 29 geführt, die später im Detail noch beschrieben wird. Die verformten Streifen 30 werden aufgestellt und in nicht dargestellter Weise auf eine Walze 31 geführt, die zum Ausrichten und Aneinanderfügen der verformten Streifen 30 dient, und die im Detail noch beschrieben wird. Danach gelangt die so gebildete Platte auf eine Führungseinrichtung 32, wo diese mit einer Schneideinrichtung 33 in einzelne Plattenelemente geschnitten wird. Die Schneideinrichtung 33 ist in bekannter Weise so ausgebildet, dass sie der kontinuierlich entlang der Führungseinrichtung 32 vorlaufenden Platte folgen kann und hierbei den Schnittvorgang ausüben kann, und dass sie danach in die Ausgangsposition zurückgeführt wird.

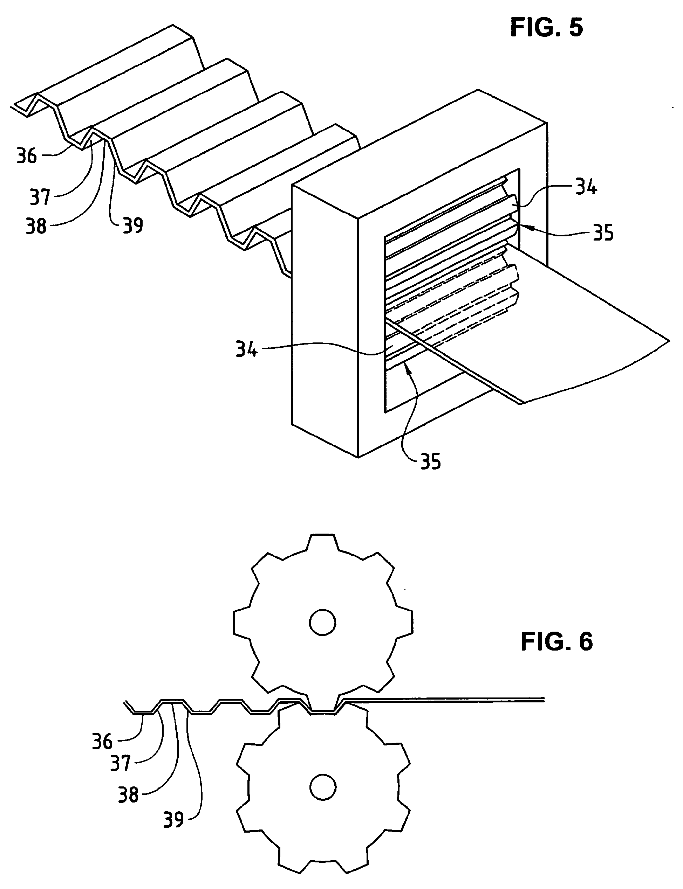

Wie aus den Fig. 5 und 6 ersichtlich ist, besteht jede Verformungseinrichtung 29 aus zwei mit Zähnen 34 ausgestatteten Rädern 35, die so angeordnet sind, dass die Zähne 34 der beiden benachbarten Räder 35 ineinander greifen. Der Streifen 26, der von den Spulen 27 (Fig. 4) kommt, wird zwischen den beiden Rädern 35 hindurchgeführt und wird im kalten Zustand verformt. Der so verformte Streifen 30 weist jeweils eine Grundfläche 36, eine ansteigende Fläche 37, eine zur Grundfläche 36 parallele obere Fläche 38 und eine absteigende Fläche 39 auf. Die Länge der so gebildeten Flächen ist im wesentlichen gleich. Der zwischen den Flächen entstehende Winkel beträgt etwa 120°. Als Material wird vorzugsweise PET verwendet mit einer Dicke von etwa 0,2 mm. Selbstverständlich sind auch andere geeignete Materialien denkbar.

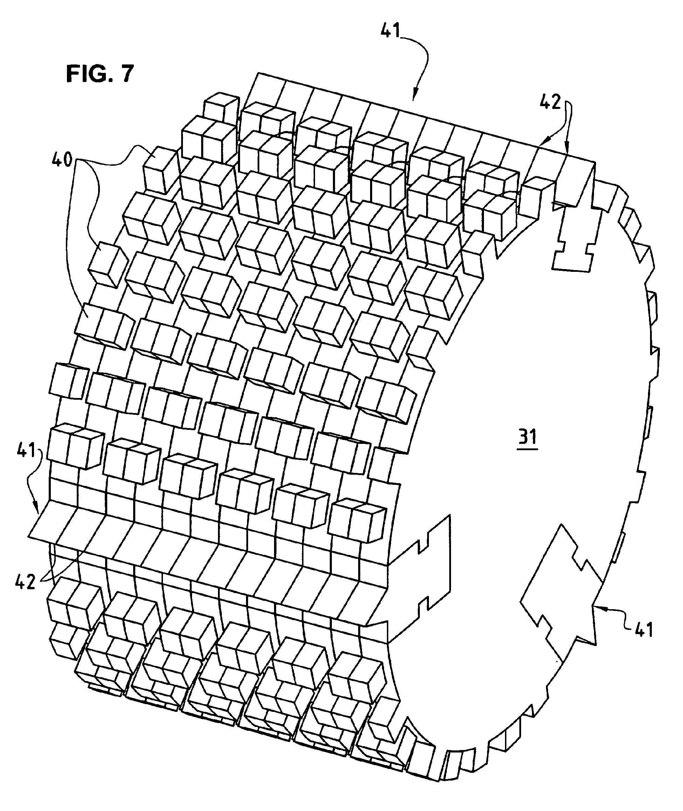

Die so verformten Streifen 30 werden, wie bereits erwähnt, zur Walze 31 (Fig. 4) geführt. Diese Walze 31 ist in Fig. 7 dargestellt, und weist an der Walzenoberfläche in Reihe angeordnete Führungsnocken 40 auf. Diese Führungsnocken 40 dienen zur Führung und Ausrichtung der verformten Streifen 30, die aufgestellt und nebeneinander liegend über diese Walze 31 geführt werden. Ferner ist diese Walze 31 mit Heizelementen 41 ausgestattet, die sich über die Breite der Walze 31 erstrecken, die mit Schlitzen 42 versehen sind, und die gemäss der Ordnung der Führungsnocken 40 ausgerichtet sind.

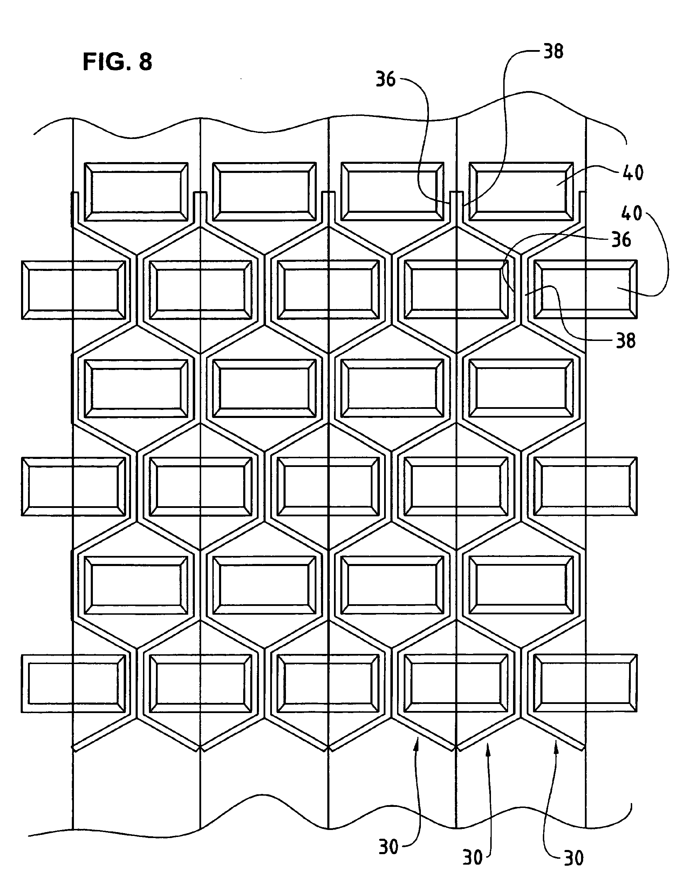

Wie aus Fig. 8 ersichtlich ist, werden die verformten Streifen 30 durch die Führungsnocken 40 der Walze 31 so ausgerichtet, dass jeweils die Grundfläche 36 des einen verformten Streifens auf die obere Fläche 38 des benachbarten verformten Streifens zu liegen kommt und umgekehrt.

In den Schlitzen 42 der Heizelemente 41 werden somit Grundfläche 36 und obere Fläche 38 zweier benachbarter Streifen 30 zusammengepresst und erwärmt, so dass im wesentlichen eine Schmelzverbindung entsteht, so dass die nebeneinander liegenden Streifen miteinander verbunden werden. Versuche haben gezeigt, dass optimale Verbindungen erhalten werden, wenn die Heizelemente 41 auf eine Temperatur von etwa 300 °C gebracht werden. Auf der Walze 31 müssen mindestens zwei Heizelemente 41 angeordnet sein, wobei zwischen den beiden Heizelementen 41 eine gerade Anzahl von Reihen von Führungsnocken 40 vorhanden sein müssen.

Das Aufheizen der Heizelemente 41 erfolgt beispielsweise in bekannter Weise elektrisch, die Heizelemente 41 können in bekannter Weise isoliert in der Walze 31 eingebettet sein.

Die so zusammengefügte fortlaufende Platte wird dann, wie bereits erwähnt, in einzelne Plattenelemente geschnitten.

Die Plattendicke wird durch die Wahl der Streifenbreite festgelegt, es ist ohne weiteres denkbar, dass neben der einen vorgesehenen Walze 31, die auf der einen Seite der entstehenden Platte angeordnet ist, auch auf der gegenüberliegenden Seite der Platte eine derartige Walze angeordnet werden kann, so dass auf beiden Seiten der Platten eine Verbindung der einzelnen Streifen vorgenommen wird. Dies ist insbesondere bei Platten vorteilhaft, die eine relativ grosse Dicke aufweisen.

Diese Vorrichtung zum Herstellen von wabenförmigen Platten und das Verfahren zur Herstellung von wabenförmigen Platten mittels dieser Vorrichtung sind sehr einfach, die wabenförmigen Platten zeichnen sich durch ein sehr geringes Gewicht aus und sind insbesondere auch geeignet für die Verwendung für die vorgängig beschriebenen Fassadenverkleidung.

## Patentansprüche

1. Vorrichtung zum Herstellen von wabenförmigen wärmedämmenden, lichtdurchlässigen Platten (14) aus in Streifen geschnittenen Folien, insbesondere zur Verwendung in einer Fassadenverkleidung für Gebäudewände (2), **dadurch gekennzeichnet, dass** die Verformung der einzelnen Streifen (26) jeweils durch zwei mit entsprechenden Zähnen (34) ausgestatteten Rädern (35) durchführbar ist, welche Zähne (34) ineinander greifen, dass Führungsmittel zum Aufstellen der verformten Streifen (30) vorgesehen sind, und dass zum Ausrichten und Aneinanderfügen der verformten Streifen (30) mindestens eine Walze (31) vorgesehen ist, welche mit Führungsnocken (40) und Heizelementen (41) ausgestattet ist, auf welcher die nebeneinander stehenden verformten Streifen (30) abrollen.

2. Vorrichtung nach Anspruch 1, **dadurch gekennzeichnet, dass** die Streifen (26) auf Spulen (27) aufgewickelt sind, welche Spulen (27) in einem Magazin (28) angeordnet sind.

3. Vorrichtung nach Anspruch 1 oder 2, **dadurch gekennzeichnet, dass** nach der Walze (31) eine Führungseinrichtung (32) angeordnet ist, entlang welcher die Platte führbar ist und dass an dieser Führungseinrichtung (32) eine Schneideinrichtung (33) angebracht ist.

4. Vorrichtung nach Anspruch 3, **dadurch gekennzeichnet, dass** die Schneideinrichtung (33) während des Schneidvorgangs mit der fortlaufenden Platte mitlaufend ist und danach in die Ausgangsposition zurückfahrbar ist.

5. Vorrichtung nach einem der Ansprüche 1 bis 4, **dadurch gekennzeichnet, dass** die Breite der Platte durch die wählbare Anzahl der zuführbaren Streifen festlegbar ist und dass die Länge der Platte durch die Wahl des Schneidintervalls einstellbar ist.

6. Verfahren zum Herstellen von wabenförmigen wärmedämmenden, lichtdurchlässigen Platten mittels einer Vorrichtung nach einem der Ansprüche 1 bis 5, wobei in Streifen (26) geschnittene Folien derart verformt werden, dass jeweils aufeinander folgend eine Grundfläche (36), eine ansteigende Fläche (37), eine zur Grundfläche (36) parallele obere Fläche (38) und eine absteigende Fläche (39) gebildet werden, die so geformten Streifen (30) aufgestellt und so aneinander gelegt werden, dass jeweils Grundflächen (36) und obere Flächen (38) von benachbarten Streifen aufeinander zu liegen kommen, und mindestens ein Teil dieser aufeinander liegenden Grundflächen (36) und oberen Flächen (38) benachbarter Streifen mindestens teilweise miteinander verbunden werden und eine fortlaufende wabenförmige Platte gebildet wird.

7. Verfahren nach Anspruch 6, **dadurch gekennzeichnet, dass** die Streifen (26) aus einer Folie aus PET oder ähnlichem Material geschnitten werden.

8. Verfahren nach Anspruch 7, **dadurch gekennzeichnet, dass** die verformten Streifen (30) durch örtliche Erwärmung mindestens eines Teils der aufeinander liegenden Grundflächen (36) und der oberen Flächen (38) benachbarter Streifen und durch Pressung miteinander verbunden werden.

9. Verfahren nach einem der Ansprüche 6 bis 8, **dadurch gekennzeichnet, dass** die fortlaufende wabenförmige Platte durch eine Querschneideinrichtung (33) geführt und in einzelne Plattenelemente geschnitten wird.

## Claims

1. Device for producing honeycomb-shape, heat insulating, light-transparent plates (14) of foils cut into strips, in particular for use in a façade covering for building walls, **characterised in that** the shaping of the individual strips (26) is carried out in each case by wheels (35) provided with corresponding teeth (34), **in that** guide means are provided for setting up the shaped strips, and **in that** for aligning and joining the shaped strips (30) at least one roller (31) is provided, which is equipped with cam followers (40) and heating elements (41), on which the shaped strips (40), situated next to one another, roll.

2. Device according to claim 1, **characterised in that** the strips (26) are rolled on coils (27), which coils are disposed on a magazine (28).

3. Device according to claim 1 or 2, **characterised in that** following the roller (31) a guide device (32) is disposed, along which the plate is able to be conducted, and **in that** a cutting device (33) is disposed on this guide device (32).

4. Device according to claim 3, **characterised in that** the cutting device (33) moves along with the progressing plate during the cutting step, and afterwards is able to be moved back into the starting position.

5. Device according to one of the claims 1 to 4, **characterised in that** the width of the plate is able to be established through the selectable number of conveyable strips, and **in that** the length of the plate is adjustable through selection of the cutting interval.

6. Device for producing honeycomb-shaped, heat insulating, light-transparent plates by means of a device according to one of the claims 1 to 5, foils cut into strips (26) are shaped such that in each case a base area (36), an inclining surface (37), an upper surface (38), parallel to the base area (36), and declining surface (39), which sets up the thus formed strips, and are laid adjoining one another, in that in each case base areas (36) and upper areas (38) of adjacent strips come to lie one on the other, and at least a portion of these base surfaces lying on one another and upper surface (38) of adjacent strips are at least partially connected to one another, and form a continuous honeycomb-shaped plate.

7. Method according to claim 6, **characterised in that** the strips (26) are cut from a foil of PET or similar material.

8. Method according to claim 7, **characterised in that** the shaped strips (30) are connected by local heating of at least a portion of the base areas (36) lying on one another and the upper surfaces (38) of adjacent strips and through pressing together.

9. Method according to one of the claims 6 to 8, **characterised in that** the continuous honeycomb-shaped plate is led through a transversal cutting device (33) and is cut into individual plate elements.

## Revendications

1. Dispositif pour la fabrication de plaques transparentes, thermoisolantes alvéolaires (14) à partir de feuilles coupées en bandes, en particulier pour une utilisation dans un habillage de façades pour des murs de bâtiments (2), **caractérisé en ce que** la déformation de chacune des bandes (26) est exécutable respectivement par deux roues (35) munies de deux dents correspondantes (34), dents (34) qui s'engrènent entre elles, **en ce que** des moyens de guidage pour la mise en place des bandes déformées (30) sont prévus et **en ce que** pour l'alignement et l'assemblage des bandes déformées (30), il est prévu au moins un rouleau (31) qui est muni de cames de guidage (40) et d'éléments de chauffage (41) sur lesquels roulent les bandes (30) déformées se trouvant les unes à côté des autres.

2. Dispositif selon la revendication 1, **caractérisé en ce que** les bandes (26) sont déroulées sur des bobines (27), les bobines (27) étant disposées dans un magasin (28).

3. Dispositif selon la revendication 1 ou 2, **caractérisé en qu'**il est disposé après le rouleau (31) un dispositif de guidage (32) le long duquel peut être guidée la plaque et en ce que sur le dispositif de guidage (32) est placé un dispositif de coupe (33).

4. Dispositif selon la revendication 3, **caractérisé en ce que** le dispositif de coupe (33) est entraîné pendant le procédé de coupe avec la plaque continue et peut être ramené ensuite dans la position de départ.

5. Dispositif selon l'une des revendications 1 à 4, **caractérisé en ce que** la largeur de la plaque est déterminable par le nombre sélectionnable des bandes pouvant être amenées et **en ce que** la longueur de la plaque est réglable par le choix de l'intervalle de coupe.

6. Procédé pour la fabrication de plaques transparentes, thermoisolantes alvéolaires au moyen d'un dispositif selon l'une des revendications 1 à 5, des feuilles découpées en bandes (26) étant déformées de sorte que respectivement successivement une surface de base (36), une surface montante (37), une surface (38) supérieure parallèle à la surface de base (36) et une surface descendante (39) sont formées, les bandes ainsi formées (30) étant mises en place et juxtaposées de sorte que respectivement des surfaces de base (36) et des surfaces supérieures (38) de bandes voisines sont juxtaposées et au moins une partie de ces surfaces de base (36) juxtaposées sont reliées partiellement entre elles et forment une plaque continue alvéolaire.

7. Procédé selon la revendication 6, **caractérisé en ce que** les bandes (26) sont coupées à partir d'une feuille en PET ou matériau similaire.

8. Procédé selon la revendication 7, **caractérisé en ce que** les bandes déformées (30) sont reliées ente elles par réchauffage local d'au moins une partie des surfaces de base superposés (36) et des surfaces supérieures (38) et par pression entre elles.

9. Procédé selon l'une des revendications 6 à 8, **caractérisé en ce que** la plaque alvéolaire continue est guidée par un dispositif de coupe transversal (33) et est découpée en éléments individuels de plaque.
